# EUROPEAN PATENT APPLICATION

(11) **EP 4 159 580 A1**
(43) Date of publication of application: **05.04.2023**
(21) Application number: 21813219.9
(22) Date of filing: 14.05.2021
(51) Int. Cl.: B61L 25/00, G06T 7/00, H04N 7/18

(54) **MONITORING DEVICE AND MONITORING METHOD**

(30) Priority: 29.05.2020 JP 2020094617
(71) Applicant: KABUSHIKI KAISHA TOSHIBA, Minato-ku Tokyo 105-0023 (JP); Toshiba Infrastructure Systems & Solutions Corporation, Kawasaki-shi, Kanagawa 212-0013 (JP)
(72) Inventor: ASANO Wataru, Kawasaki-shi, Kanagawa 212-0013 (JP); KOBAYASHI Hiroyuki, Kawasaki-shi, Kanagawa 212-0013 (JP); SETO Naoto, Kawasaki-shi, Kanagawa 212-0013 (JP)
(74) Representative: AWA Sweden AB
(86) International application number: PCT/JP2021/018378
(87) International publication number: WO 2021/241270

(57) **Abstract**

A monitoring device according to the present embodiment comprises a video selector, an image selector, a generator, and an output part. The video selector is configured to select, based on imaging conditions of a first video as a monitoring target, a second video corresponding to the imaging conditions from a plurality of videos. The image selector is configured to use information indicating a position of first images to select a second image corresponding to each of the first images constituting the first video from the second video. The generator is configured to generate comparison information between each of the first images and the second image corresponding to the first images. The output part is configured to output information related to a first image having a predetermined change in the first video based on the comparison information.

## Description

### Field

Embodiments of the present invention relate to a monitoring device and a monitoring method.

### Background

There is known a technology to detect changed portions using oncoming traveling videos taken by a camera installed on a vehicle in order to reduce a checking load of ground facilities around railroads for trains. At the time of detection, reference videos imaged in the past and freshly imaged target videos are compared with each other and portions having any changes are detected. However, there is a concern that portions other than checking targets such as shading are also erroneously detected as changed portions.

### Citation List

### Patent Literatures

Patent Literature 1: Japanese Patent Application Laid-open No. 2008-227844
Patent Literature 2: Japanese Patent Application Laid-open No. 2018-028516

### Summary

### Technical Problem

To provide a monitoring device and a monitoring method that can prevent erroneous detections.

### Solution to Problem

A monitoring device according to the present embodiment comprises a video selector, an image selector, a generator, and an output part. The video selector is configured to select, based on imaging conditions of a first video as a monitoring target, a second video corresponding to the imaging conditions from a plurality of videos. The image selector is configured to use information indicating a position of first images to select a second image corresponding to each of the first images constituting the first video from the second video. The generator is configured to generate comparison information between each of the first images and the second image corresponding to the first images. The output part is configured to output information related to a first image having a predetermined change in the first video based on the comparison information.

### Brief Description of Drawings

[FIG. 1] FIG. 1 is a block diagram illustrating a configuration example of a monitoring system.
[FIG. 2] FIG. 2 is a block diagram illustrating a configuration of the monitoring device.
[FIG. 3] FIG. 3 is a block diagram illustrating a detailed configuration example of a difference calculator.
[FIG. 4] FIG. 4 is a block diagram illustrating a detailed configuration example of a difference display part.
[FIG. 5] FIG. 5 is a diagram schematically illustrating an example of a detection process by a changed-site detector.
[FIG. 6] FIG. 6 is a diagram schematically illustrating an example of a generated image in an image generator.
[FIG. 7] FIG. 7 is a flowchart illustrating a process example of the monitoring device.
[FIG. 8] FIG. 8 is a block diagram illustrating a configuration of a difference image generator according to a modification of a first embodiment.
[FIG. 9] FIG. 9 is a block diagram illustrating a configuration of an image selector according to a second embodiment.
[FIG. 10] FIG. 10 is a flowchart illustrating processes of the image selector according to the second embodiment.

### Description of Embodiments

Embodiments of the present invention will now be explained with reference to the accompanying drawings. In the drawings accompanying this specification, for the conveniences of illustration and easier understanding, the scales, ratios of horizontal and vertical sizes, and the like of constituent elements are illustrated in a modified or exaggerated manner with regard to actual products.

### (First embodiment)

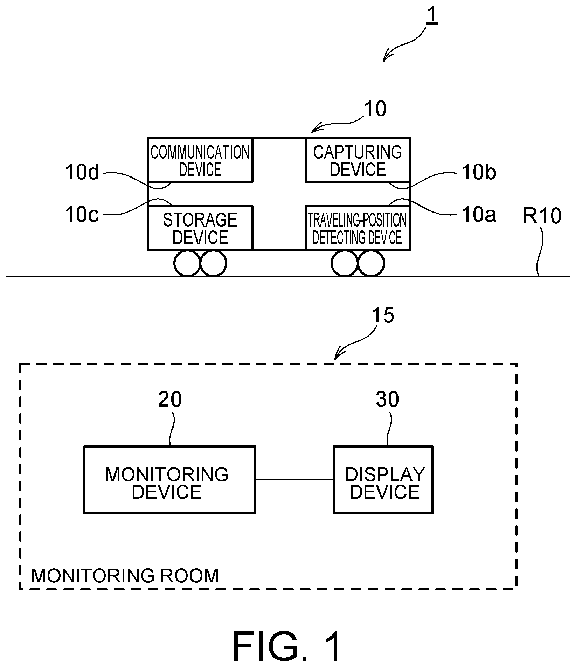

FIG. 1 is a block diagram illustrating a configuration example of a monitoring system 1 according to the present embodiment. As illustrated in FIG. 1, the monitoring system 1 according to the present embodiment includes a train-position detecting device 10a, a capturing device 10b, a storage device 10c, and a communication device 10d that are mounted on a railroad vehicle 10, and a monitoring device 20 and a display device 30 arranged in a monitoring room 15.

The railroad vehicle 10 travels on a rail track R10 that is a fixed track. The train-position detecting device 10a detects the traveling position of the railroad vehicle 10 in a time series (see Patent Literature 2).

The capturing device 10b is a camera, for example, and is capable of continuously capturing RGB images as traveling videos. The capturing device 10b is fixed, for example, on the front of the railroad vehicle 10 and captures images with a same capturing ratio. Therefore, for example, when respective images constituting a traveling video captured during the railroad vehicle 10 traveling on the rail track R10 are captured at the same site, these images are those having mutually the same angle and same capturing ratio. Further, the capturing device 10b stores the respective images in the storage device 10c while associating these images with a time and a position on the rail track R10 detected by the train-position detecting device 10a.

Further, traveling videos captured by the capturing device 10b are associated with imaging conditions. The imaging conditions include the weather and imaging date and time. The weather is sunny, cloudy, rainy, and the like. The date and time include a capturing date and a capturing time, as well as information of the time of day such as morning, daytime, and evening and the season, that is, spring, summer, autumn, and winter.

The storage device 10c is constituted by a device such as an HDD (hard disk drive) or an SSD (solid state drive). As described above, the storage device 10c stores therein respective images constituting a traveling video captured by the capturing device 10b while associating these images with a position on the rail track R10, a capturing date, and a capturing time.

The communication device 10d is wirelessly communicable and communicates with, for example, the monitoring device 20 of the monitoring room 15. The communication device 10d acquires weather information in each location and each time issued by, for example, the meteorological agency and stores therein the weather information while associating it with images stored in the storage device 10c at the same time. The communication device 10d may acquire weather information and the like via the monitoring device 20 of the monitoring room 15. Further, the communication device 10d transmits videos stored in the storage device 10c to the monitoring device 20 of the monitoring room 15.

The monitoring device 20 compares a first video as a monitoring target transmitted from the railroad vehicle 10 with a second video stored therein in advance, and outputs information related to a first image having a change in the first video. In the present embodiment, a traveling video as a monitoring target is referred to as "first video" and a reference video as a comparison target is referred to as "second video". Further, an image of each frame constituting the first video is referred to as "first image" and an image of each frame constituting the second video is referred to as "second image".

The display device 30 is a monitor, for example, and displays images and information output from the monitoring device 20.

### <<Configuration of monitoring device 20>>

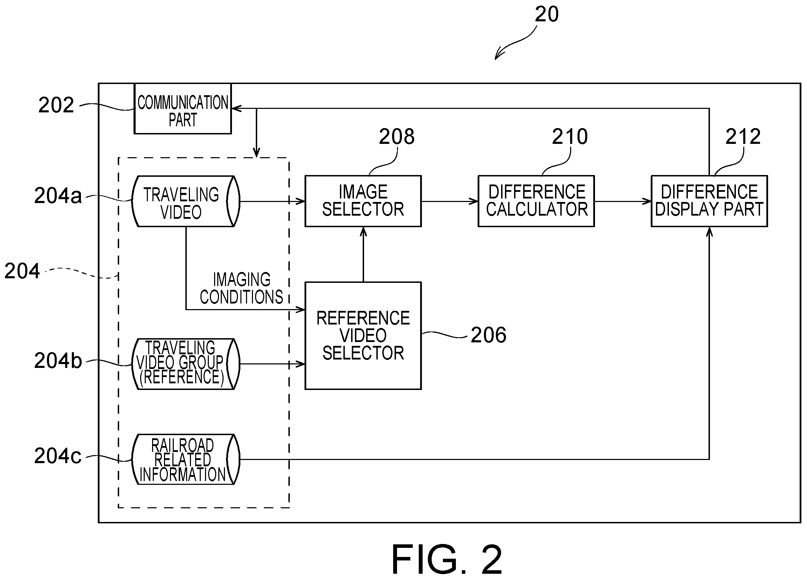

FIG. 2 is a block diagram illustrating a configuration of the monitoring device 20. The monitoring device 20 includes a communication part 202, a storage part 204, a reference video selector (video selector) 206, an image selector 208, a difference calculator (generator) 210, and a difference display part 212 (output part). The monitoring device 20 is configured to include a CPU (Central Processing Unit), for example. As described above, the storage part 204 stores therein various types of programs used for performing a monitoring operation. With this configuration, the monitoring device 20 executes, for example, the programs stored in the storage part 204 to constitute each element.

The communication part 202 is wirelessly communicable and communicates with the railroad vehicle 10 to acquire a first video as a monitoring target. Further, it is possible to configure that the communication part 202 acquires weather information in each location and each time issued by, for example, the meteorological agency and transmits the weather information to the railroad vehicle 10. The first video may be acquired without using any communication while the storage device 10C of the railroad vehicle 10 is removed and is attached to the monitoring device 20 instead.

The storage part 204 includes a traveling-video storage part 204a, a traveling-video group (reference) storage part 204b, and a railroad-related information storage part 204c. The storage part 204 is constituted by a device such as an HDD (hard disk drive) or an SSD (solid state drive). Further, the storage part 204 stores therein various types of programs for performing a monitoring operation as described above.

The traveling-video storage part 204a stores therein the first video as a monitoring target.

The traveling-video group (reference) storage part 204b stores therein a plurality of second videos as reference videos. The second videos are, for example, videos captured by the capturing device 10b described above and captured within a range including a section where the first video is captured. These second videos are imaged under various imaging conditions. That is, the second videos are captured in different seasons, different times and dates, and different weathers. Similarly to the first video, a time, imaging conditions, and a position on the rail track R10 detected by the train-position detecting device 10a are associated with each of the second videos.

Reference videos under various imaging conditions are necessary because when the weather and the time are different, the direction of sunlight varies and the shapes of shadows change. Further, when the season is different, a difference in the growth situation of plants occurs. The reference videos may have all the combinations among the weather, the time, and the season; however, a part of the combinations may be omitted because videos take a large memory capacity.

The railroad-related information storage part 204c stores therein, for example, position information on a maintenance-personnel waiting place along the rail track R10, position information on a station, and traveling information on the railroad vehicle 10 between stations. A traveling scheduled time at each position between stations is associated with the traveling information on the railroad vehicle 10 between stations. With this configuration, the image selector 208 described later can coordinate a traveling time of the railroad vehicle 10 and a traveling position of the railroad vehicle 10 on the rail track R10. Here, the position information is information on latitude and longitude provided by GNSS, information on a kilometer distance of a rail track, and the like.

The reference video selector 206 selects, based on imaging conditions on a first video (a first traveling video) of a difference detection target, a second video close to the imaging conditions from a group of a plurality of reference videos (second videos) imaged in advance as a reference video. More specifically, the reference video selector 206 acquires imaging conditions on a first video from information associated with the first video, and selects a second video close to the imaging conditions from a plurality of second videos as a reference video. As described above, the imaging conditions are, for example, the weather and imaging date and time. The weather is sunny, cloudy, rainy, and the like. The imaging date and time include information on the time of day such as morning, daytime, and evening, as well as the season, that is, spring, summer, autumn, and winter.

In this manner, the reference video selector 206 uses information related to a state of shade or a growth situation of plants as imaging conditions to select a second video having a state of shade similar to that of the first video or a second video having a growth situation of plants similar to that of the first video. More specifically, the reference video selector 206 uses at least one of the weather and date and time as imaging conditions to select a second video similar in illuminance and sunshine angle to the first video.

For example, the reference video selector 206 selects a second video having a starting date and time same as the date and time when capturing the first video is started. In this case, the railroad vehicle 10 at the time of capturing each of the first images and the railroad vehicle 10 at the time of capturing a second image corresponding thereto pass the same site at substantially the same time, so that the illuminance and the sunshine angle at the time point of imaging each of the first images and those at the time point of imaging the second image corresponding thereto are similar to each other. Therefore, the state of shade in each of the first images and that in the second image corresponding thereto are similar to each other. Here, the state of shade means the length of shading, a difference in illuminances between the illuminance inside shading and the illuminance outside shading, and the like.

Further, in this case, it is more preferable to adjust the condition of illuminance according to the weather. Therefore, when the first video is imaged under a sunny weather, as for the second video, the reference video selector 206 selects an image imaged under a sunny weather. Similarly, if the first video is imaged under a cloudy weather, as for the second video, the reference video selector 206 selects an image imaged under a cloudy weather.

Further, there is a case where there is no reference video satisfying all the conditions of the time, the weather, and the season. In this case, the reference video selector 206 selects a reference video while attaching a priority order on information on existing imaging conditions, such as setting the time as the first priority, the weather as the second priority, and the season as the third priority. For example, when information related to the state of shade is prioritized and information related to the time is missing, the reference video selector 206 sets the weather as the first priority and the season as the second priority. This is because the difference between states of shade tends to be larger due to the difference in illuminances according to the weather rather than the difference in sunshine angles according to the season. Further, for example, when information related to the growth situation of plants is prioritized, the reference video selector 206 sets the season as the first priority, the time as the second priority, and the weather as the third priority. This is because the difference in growths of plants becomes the largest according to the difference in seasons.

The image selector 208 selects a second image corresponding to each of first images constituting the first video from the second video using information indicating the position of the first images. More specifically, the image selector 208 searches a frame image at the same site as a capturing site of a first image as a target frame from the second video and selects a second image that is closest to the capturing site. The image selector 208 is also capable of searching a second image while associating a traveling time of the railroad vehicle 10 and a traveling position of the railroad vehicle 10 on the rail track R10.

### <<Configuration of difference calculator 210>>

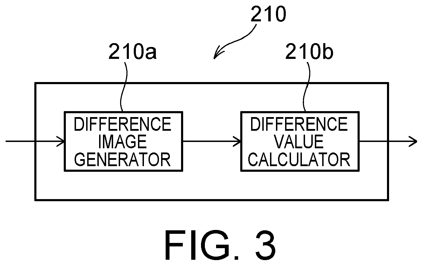

FIG. 3 is a block diagram illustrating a detailed configuration example of the difference calculator 210 of the monitoring device 20. As illustrated in FIG. 3, the difference calculator 210 calculates a value indicating a difference amount between selected images. That is, the difference calculator 210 generates comparison information between each of first images constituting a first video and a second image corresponding thereto. The difference calculator 210 includes a difference image generator 210a and a difference value calculator 210b.

More specifically, the difference image generator 210a generates a difference image between each of first images constituting a first video and a second image corresponding thereto. The difference image generator 210a standardizes statistical values of pixel values such that, for example, each image has a mean value 0 and a variance value 1, and generates the difference between each of the pixel values of both images as a difference image. With this process, it becomes possible to decrease the difference in brightness between images and the influences due to noise. Further, the difference image generator 210a may generate a difference image after performing noise cancelation using filtering. With this configuration, it becomes possible to reduce detection errors due to noise.

Further, the difference image generator 210a may divide an image into small regions to generate a difference image after performing motion compensation on each of the regions. With this process, it becomes possible to decrease the influences due to fine pixel displacement between images.

The difference value calculator 210b calculates a difference value from a difference image. Here, the difference value is an absolute value sum and a square sum of respective pixels in the difference image. In this manner, by performing any of standardization, noise cancelation, and motion compensation on images, a difference selector 130 of the monitoring device 20 can reduce the differences between the images that occur even when these are images at the same position. Therefore, it is possible to decrease the influences due to a difference in brightness, noise, and pixel displacement and to highly accurately detect, as a difference, changed portions due to degradation of a checking subject.

### <<Configuration of difference display part 212>>

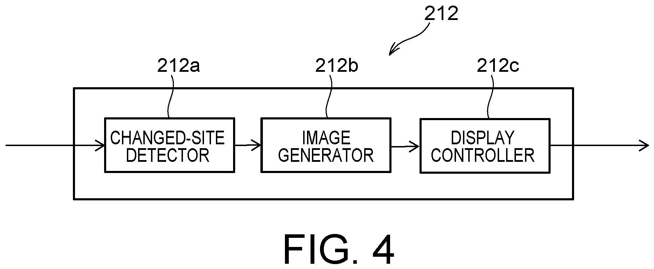

FIG. 4 is a block diagram illustrating a detailed configuration example of the difference display part 212 of the monitoring device 20. The difference display part 212 includes a changed-site detector 212a, an image generator 212b, and a display controller 212c.

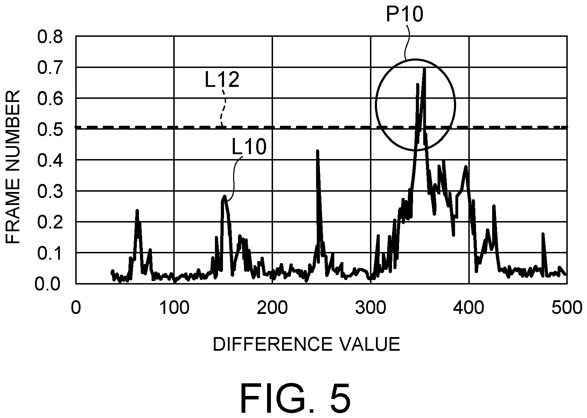

FIG. 5 is a diagram schematically illustrating an example of a detection process by the changed-site detector 212a. The vertical axis represents a mean value per one pixel of a difference value and the horizontal axis represents a frame number of a first video. That is, the frame number is a number representing a first image. As illustrated in FIG. 5, a difference value L10 in time series differs in each pixel. That is, the difference value becomes larger as the difference between each of the first images and a second image corresponding thereto becomes larger.

The changed-site detector 212a outputs, based on comparison information (a difference value), information related to a first image having a predetermined change in the first video. More specifically, the changed-site detector 212a detects a first image group P10 in which a time-series difference value L10 exceeds a threshold L12 such as 0.5 set in advance as an image having a predetermined change. That is, a predetermined change means a difference value of a second image corresponding to a first image exceeds a predetermined value. In this case, any of the probability as to whether an object not shown in the second image is shown in the first image, an object shown in the second image is shown in the first image in a degraded or changed form, or an object shown in the second image has disappeared and not shown in the first image becomes high. The threshold L12 may be constant in the entire sections or may be changed in each frame number (imaging position). This is because there are positions where a difference tends to be larger due to the surrounding environment of imaging positions.

Further, the changed-site detector 212a outputs, based on comparison information, information related to the position on the rail track R10 where a first image having a change is captured. In this case, the changed-site detector 212a outputs information on a capturing position associated with, for example, a first image having a predetermined change.

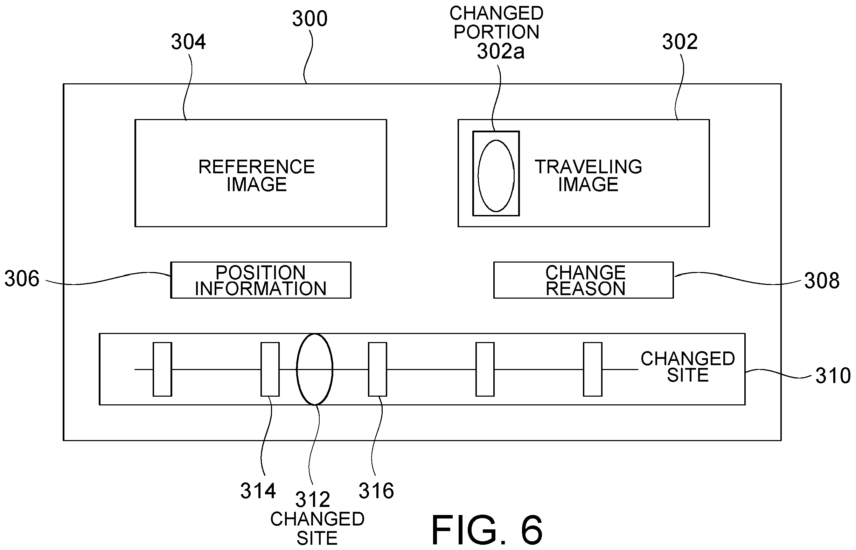

FIG. 6 is a diagram schematically illustrating an example of a generated image 300 generated by the image generator 212b. As illustrated in FIG. 6, the image generator 212b generates an image including information on a first image 302 as a traveling image frame having a change, a region 302a in the first image 302 having a change, a second image 304 as a reference image corresponding to the first image 302, position information 306 corresponding to the first image 302, a change reason 308 of the region 302a, a track chart 310, a changed site 312 in the track chart 310 having a change, and nearby maintenance-personnel waiting places 314 and 316.

More specifically, the image generator 212b acquires the first image 302 having a change and the second image 304 corresponding to the first image 302 from the storage part 204 based on output information of the changed-site detector 212a, and displays these images in the generated image 300. At this time, the image generator 212b extracts a region having an absolute value of a difference value in a difference image generated by the difference image generator 210a larger than a predetermined value with, for example, threshold processing and labelling processing, and displays the extracted region as the region 302a.

Further, the image generator 212b includes a recognition device that recognizes an imaging target in a general image, and displays a category of the region 302a as the change reason 308. For example, the recognition device of the image generator 212b has learned elements such as car, human, animal, building, fire, tree, and plant name, and displays the category as the change reason 308. Meanwhile, when it is determined that an object shown in the second image 304 is changed or disappeared in the first image 302 based on a difference value of the region 302a, the recognition device of the image generator 212b displays a category of an image region corresponding to the region 302a in the second image 304 as the change reason 308. For example, when the difference value of a region having an absolute value larger than a predetermined value is positive, it indicates that a new object is shown in the first image, and when the difference value is negative, it indicates that the object shown in the second image has disappeared in the first image. The positive and the negative may be reversed.

Further, the image generator 212b uses railroad related information in the storage part 204 to generate the track chart image 310 including information on the changed site 312 and the nearby maintenance-personnel waiting places 314 and 316.

The display controller 212c causes the display device 30 to display information on the generated image 300. With this configuration, a monitoring person in the monitoring room 15 can instantly determine the necessity of maintenance, the method of maintenance, the contact of maintenance-personnel, and the like.

Further, the display controller 212c transmits information on the generated image 300 via the communication part 202 to other display devices arranged in the nearby maintenance-personnel waiting places 314 and 316. With this configuration, maintenance personnel in the maintenance-personnel waiting places 314 and 316 can check the generated image 300. In this manner, the maintenance personnel in the maintenance-personnel waiting places 314 and 316 can also instantly determine the necessity of maintenance, the method of maintenance, and the like based on image information.

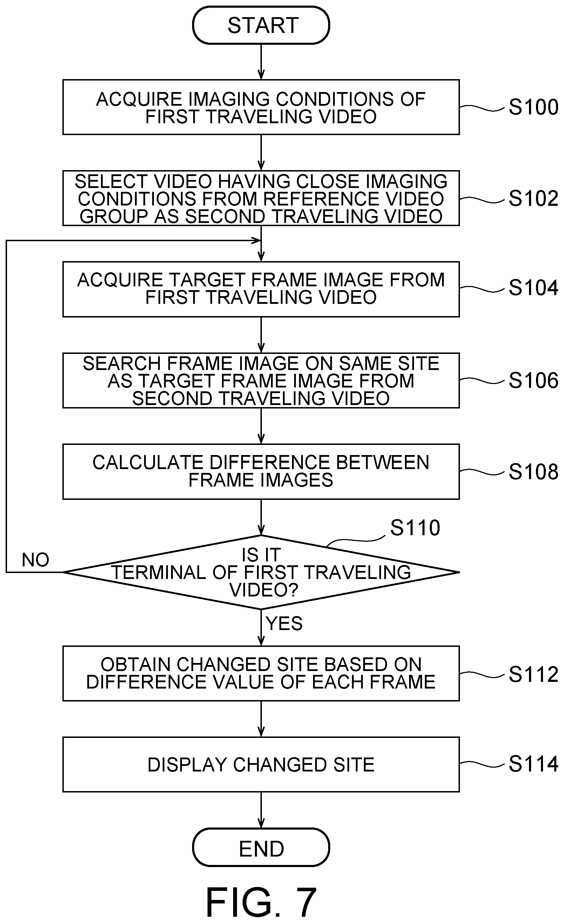

FIG. 7 is a flowchart illustrating a process example of the monitoring device 20. As illustrated in FIG. 7, first, the reference video selector 206 acquires imaging conditions of a first video (first traveling image) of a difference detection target (Step S100).

Next, the reference video selector 206 selects, as a reference video, a second video having been acquired from a plurality of second images (reference videos) having imaging conditions close to those of the first video (Step S102).

Next, the image selector 208 acquires a first image of a frame as a difference detection target from the first video (Step S104). Subsequently, the image selector 208 searches a frame image on the same site as the first image as a target frame from the second video and selects the most closely positioned second image (Step S106).

Next, the difference calculator 210 calculates a value indicating a difference amount between the first image and a second image corresponding to the first image (Step S108). The difference calculator 210 determines whether it is a terminal of the first video (Step S110). When it is not a terminal (no at Step S110), the difference calculator 210 repeats the processes from Step S104 on the next first image.

Meanwhile, when it is a terminal (yes at Step S110), the difference display part 212 obtains a site corresponding to a changed first image in the first video based on a value indicating a difference amount of each frame (S107), displays an image and information of the changed site on the display device 30 (Step S114), and ends the process. In this manner, the monitoring device 20 selects a second video from a group of a plurality of second videos (reference videos) based on imaging conditions, compares each first image of the first video and a second image corresponding thereto, and detects a site having a change.

As described above, according to the present embodiment, it is configured that the reference video selector 206 selects a second video corresponding to imaging conditions from a plurality of videos based on the imaging conditions of a first video as a monitoring target and the image selector 208 selects a second image corresponding to each of first images from the second video using information indicating an imaging position of the first image. With this configuration, each of the first images constituting the first video and a second image having an imaging position and imaging conditions corresponding thereto can be compared with each other. Therefore, the difference between image information on each of the first images and that on a second image corresponding thereto occurring due to differences of imaging conditions is reduced, so that erroneous detections of portions having a change are prevented.

### (Modification of first embodiment)

The monitoring device 20 according to a modification of the first embodiment is different from the monitoring device 20 according to the first embodiment in a feature that the difference image generator 210a of the difference calculator 210 is constituted with a neural network. In the following descriptions, differences from the monitoring device 20 according to the first embodiment are explained.

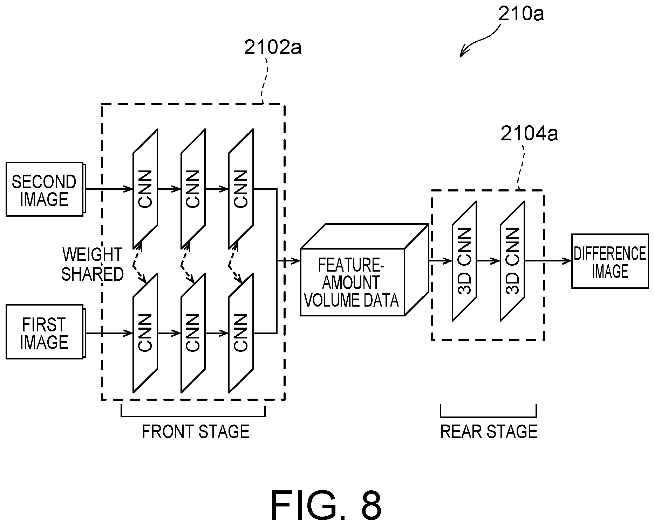

FIG. 8 is a block diagram illustrating a configuration of the difference image generator 210a according to the modification of the first embodiment. As illustrated in FIG. 8, the difference image generator 210a includes a first neural network 2102a and a second neural network 2104a. The first neural network 2102a includes a plurality of convolutional neural networks (CNN, hereinafter it may be simply referred to as "CNN").

In the CNN, neurons on each layer are grouped into filters and each of the filters detects different overlapping features in input data. The neural network architecture of a plurality of layers in a convolutional neural network includes, for example, a plurality of convolutional layers, a plurality of sampling layers, and a plurality of completely connected layers. Further, the CNN is, for example, a CNN having learned with existing labeled images (for example, ImageNet pre-trained network). That is, each of CNNs on the upper stage extracts a feature amount from each of three types of digital images, which are a red image (R image), a green image (G image), and a blue image (B image) of the second image. Similarly, each of CNNs on the lower stage extracts a feature amount from each of three types of digital images, which are a red image (R image), a green image (G image), and a blue image (B image) of the first image.

Each of the CNNs on the lower stage has a configuration identical to that of each of the CNNs on the upper stage. For example, each of the CNNs on the lower stage has the same weight (connection coefficient) as that of each of the CNNs on the upper stage. In the present embodiment, each of the RGB three primary colors is standardized to be input.

For example, one second image uses an image in which each of three types of digital images, which are a red image (R image), a green image (G image), and a blue image (B image), with 1920×1080 pixels is reduced to an image with 384×216 pixels. Accordingly, pixel data of 384×216×3 in the second image is input to the CNNs on the upper stage. Similarly, pixel data of 384×216×3 in the first image is input to the CNNs on the lower stage.

The first neural network 2102a synthesizes 3D feature-amount volume data corresponding to the pixel data of 384×216×3 in the second image and 3D feature-amount volume data corresponding to the pixel data of 384×216×3 in the first image with each other.

Upon input of 3D feature-amount volume data output from the first neural network 212a, the second neural network 2104a outputs a difference image between the first image and the second image.

The second neural network 2104a is a neural network having learned learning data that is a set of feature-amount volume data for learning synthesized by the first neural network 2102a and a difference image with 384×216 pixels for teaching. For example, in the second neural network 2104a, the connection coefficient between respective nodes is initialized and 3D feature-amount volume data having a difference image with 384×216 pixels for teaching is input sequentially. Thereafter, the second neural network 2104a corrects the connection coefficient so that an error between a difference image to be output and a difference image with 384×216 pixels for teaching set in the input 3D feature-amount volume data is reduced.

Correction of the connection coefficient is performed with processing such as back propagation. As learning data, with regard to a difference image with 224×224 pixels for teaching, it is possible to artificially and variously add information in which noise and shade state are different to an input image. Accordingly, it is possible to learn the second neural network 2104a by which a difference image in which influences with regard to the difference in noise and shade state due to illuminance changes are decreased can be generated. That is, even when the noise and shade state are mutually different between the first image and the second image, the second neural network 2104a can generate a difference image in which influences caused by these factors are decreased.

As described above, the difference image generator 210a using the first neural network 2102a and the second neural network 2104a can generate a difference image in which influences on noise and illuminance changes in an image are decreased. Accordingly, erroneous detections in the monitoring device 20 are further avoided.

### (Second embodiment)

The monitoring device 20 according to a second embodiment is different from the monitoring device 20 according to the first embodiment in a feature that the image selector 208 selects a second image by using, in addition to position information on a first image, information on similarity between the first image and the second image. In the following descriptions, differences from the monitoring device 20 according to the first embodiment are explained.

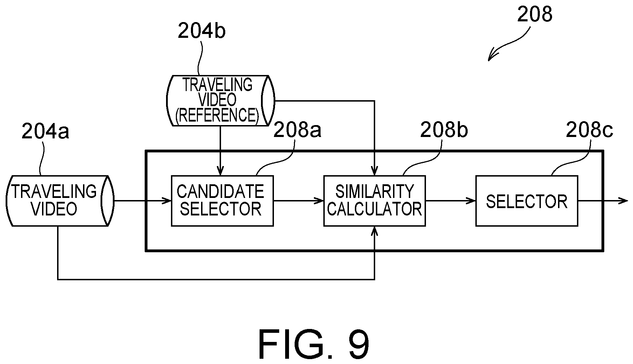

FIG. 9 is a block diagram illustrating a configuration of the image selector 208 according to the second embodiment. As illustrated in FIG. 9, the image selector 208 includes a candidate selector 208a, a similarity calculator 208b, and a selector 208c.

The candidate selector 208a selects a second image including position information closest to position information corresponding to a first image in a first video as well as a plurality of second images around the second image as candidate images.

The similarly calculator 208b calculates similarity between the first image and each of a plurality of second images selected by the candidate calculator 208a. Here, the similarity is, for example, correspondence points of image feature points such as ZNCC (Zero-means Normalized Cross-Correlation) or AKAZE. That is, the similarity calculator 208b computes similarity between the first image and the plurality of second images using Zero-means Normalized Cross-Correlation. Alternatively, the similarity calculator 208b obtains respective feature points of the first image and the plurality of second images and determines correspondence points of the feature points as similarity of these images.

The selector 208c selects a second image corresponding to the first image based on the similarity.

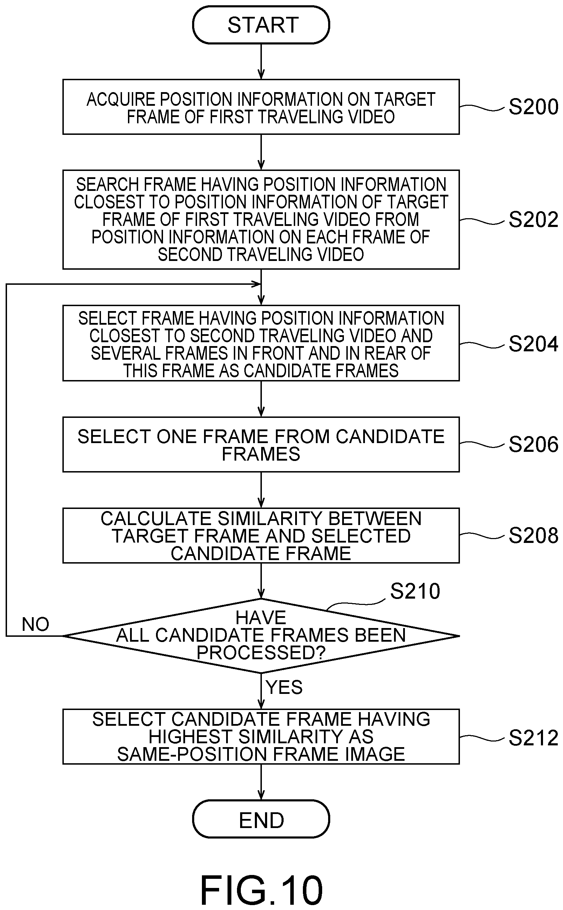

FIG. 10 is a flowchart illustrating processes of the image selector 208 according to the second embodiment. As illustrated in FIG. 10, first, the candidate selector 208a acquires position information on a first image as a target frame of a first video (detection target video) (Step S200).

Next, the candidate selector 208a uses position information on each of second images of a second video (reference video) to search a frame of position information closest to position information on the target frame (Step S202). The candidate selector 208a then selects a second image of the closest position information and second images for several frames in front and in the rear of the second image as candidate frames (Step S204).

The similarity calculator 208b selects one second image from the plurality of second images as the candidate frames (Step S206), and calculates similarity between the selected second image and the first image as the target frame (Step S206).

The similarity calculator 208b determines whether similarity has been computed with regard to all the plurality of second images as the candidate frames (Step S210). When the computation is not finished (no at Step S210), the similarity calculator 208b repeats the processes from Step S206 on second images for which similarity has not been computed yet.

Meanwhile, when similarity has been computed with regard to all the plurality of second images as the candidate frames (yes at Step S210), the selector 208c selects, as an image corresponding to the first image, a second image having the highest similarity from the plurality of second images as the candidate frames (Step S212), and ends the entire processing.

As described above, according to the image selector 208 of the second embodiment, by using similarity between images, even when there is a difference in capturing positions between a first image and a second image, a second image most similar to the first image can be selected. Accordingly, influences due to a difference in imaging positions is decreased and erroneous detections in the monitoring device 20 are further avoided.

While certain embodiments of the present invention have been described, these embodiments have been presented by way of example only, and are not intended to limit the scope of the invention. The novel embodiments described herein may be embodied in a variety of other forms, and various omissions, substitutions, and changes may be made without departing from the spirit of the invention. These embodiments and modifications thereof would fall within the scope and spirit of the invention, and would fall within the invention described in the accompanying claims and their equivalents.

## Claims

1. A monitoring device comprising:
a video selector configured to select, based on imaging conditions of a first video as a monitoring target, a second video corresponding to the imaging conditions from a plurality of videos;
an image selector configured to use information indicating a position of first images to select a second image corresponding to each of the first images constituting the first video from the second video;
a generator configured to generate comparison information between each of the first images and the second image corresponding to the first images; and
an output part configured to output information related to a first image having a predetermined change in the first video based on the comparison information.

2. The device of Claim 1, wherein the video selector is configured to select the second video similar to the first video using information related to a shade state or information related to a growth situation of plants as the imaging conditions.

3. The device of Claim 1, wherein the video selector is configured to select the second video similar in illuminance and sunshine angle to the first video using at least either a weather or a date and time as the imaging conditions.

4. The device of Claim 3, wherein
the first video is a video imaged by a capturing device mounted on a railroad vehicle that travels on a track, and
the output part is configured to output information related to a position on the track on which the first image having a predetermined change with regard to the corresponding second image is captured as information related to the first image.

5. The device of Claim 4, further comprising a display controller configured to cause a display part to display an image related to the information, wherein
the display controller is configured to cause the display part to display at least any of an image indicating the position on the track, the first image having a predetermined change, a second image corresponding to the position on the track, and information on a nearby maintenance-personnel waiting place.

6. The device of Claim 5, wherein the display controller is configured to cause the display part to display the first image corresponding to the position on the track, a changed region in the first image having a change, and information related to reasons for the change.

7. The device of any of Claims 1 to 6, wherein the image selector is configured to select, based on similarity to the first images, a second image corresponding to the first image from a plurality of the second images selected using information indicating the position.

8. The device of Claim 7, wherein the image selector is configured to select the plurality of second images from the second video based on position information accompanying the first video and the second video.

9. The device of Claim 7, wherein the image selector is configured to obtain respective feature points of the first image and the plurality of second images and to determine correspondence points of the feature points as similarity thereof.

10. The device of Claim 1, wherein the generator is configured to generate a difference image after dividing an image into small regions and performing motion compensation on each of the regions and to generate a difference value based on the difference image as the comparison information.

11. The device of Claim 1, wherein the generator is configured to generate a difference image using a neural network and to generate a difference value based on the difference image as the comparison information.

12. A monitoring method comprising:
a video selecting step of selecting, based on imaging conditions of a first video as a monitoring target, a second video corresponding to the imaging conditions from a plurality of videos;
an image selecting step of using information indicating a position of first images to select a second image corresponding to each of the first images constituting the first video from the second video;
a generating step of generating comparison information between each of the first images and the second image corresponding to the first images; and
an outputting step of outputting information related to a first image having a predetermined change in the first video based on the comparison information.
